# NEUE EUROPÄISCHE PATENTSCHRIFT

(11) **EP 0 498 757 B2**
(45) Veröffentlichungstag und Bekanntmachung des Hinweises auf die Entscheidung über den Einspruch: **05.11.1997**
(45) Hinweis auf die Patenterteilung: 16.08.1995
(21) Anmeldenummer: 92710002.4
(22) Anmeldetag: 17.01.1992
(51) Int. Cl.: B01D 46/24, B01D 46/52, F02M 35/024

(54) **Verfahren zur Herstellung eines Ringfilters aus sternförmig gefaltetem Filterbahnmaterial**
Process for making an annular filter from a filter material folded into a star shape configuration
Procédé pour la fabrication d'un filtre annulaire formé d'un matériau filtrant plié en forme d'etoile

(30) Priorität: 08.02.1991 DE 4103819
(43) Veröffentlichungstag der Anmeldung: 12.08.1992
(73) Patentinhaber: KNECHT FILTERWERKE GMBH, D-70376 Stuttgart (DE)
(72) Erfinder: Reinhardt, Alexander, W-7181 Stimpfach (DE); Kiess, Elmar, W-7117 Bretzfeld (DE); Betz, Thomas, W-7107 Nordheim (DE); Manz, Rolf, Dr., W-7110 Öhringen (DE); Bauch, Emil, W-7113 Neuenstein-Langensall (DE)
(74) Vertreter: Patentanwalts-Partnerschaft Rotermund + Pfusch

(56) Entgegenhaltungen:
- EP-A- 0 160 168
- EP-A- 0 172 699
- WO-A-90/11116
- DE-C- 2 334 586
- GB-A- 2 030 464
- US-A- 2 261 416
- US-A- 4 522 719

## Beschreibung

Die Erfindung betrifft ein Verfahren zur Herstellung eines Ringfilters aus sternförmig gefaltetem Filterbahnmaterial.

Bei Gasen mit hohen Schmutzpartikelanteilen bildet sich rohseitig ein relativ starker Filterkuchen auf dem Filtermaterial aus. In solchen Fällen werden die Filter abreinigbar ausgebildet. Um beim Abreinigen die Schmutzpartikel allseits entfernen zu können, werden derartige Filterelemente vertikal angeordnet, damit die Schmutzpartikel beim Abreinigen nach unten abfallen können.

Zur Vermeidung eines Schmutzfangraumes an den unteren Faltenenden sind bei einem aus EP-A 0 160 168 bekannten Filter die dortigen Faltenverschlüsse lediglich reinseitig vorgesehen, während diese rohseitig fehlen, d.h. die abgeschiedenen Schmutzpartikel können frei nach unten abfallen.

Der vorgenannte bekannte Faltenvershluß besteht aus einer Vergußmasse, die in eine Form eingebracht wird, in die das sternförmig gefaltete Filterbahnmaterial zur Verbindung mit der Vergußmasse eingesteckt wird. Die Form muß nach dem Erhärten der Vergußmasse entfernt werden. Dieses Herstellverfahren ist kompliziert und unrationell.

Ein einfaches Herstellverfahren für einen gattungsgemäßen Faltenverschluß ist auch aus EP-A 0 145 885 nicht bekannt.

Dort ist lediglich ein ausschließlich reinseitiger Faltenverschluß erkennbar,. Das ausschließlich reinseitige Verschließen der Faltenenden erfolgt dort mit einem anderen Ziel, nämlich die Falten auf der Rohseite sowohl radial als auch gleichzeitig axial anströmen zu können.

Faltenverschlüsse aus Vergußmasse werden im Stand der Technik üblicherweise unter Verwendung einer Gießform erzeugt. Ein Beispiel hierfür zeigt GB-A 1 151 592. Der Nachteil der bekannten Herstellungsverfahren besteht generell darin, das sternförmig gefaltete Filterbahnmaterial in eine der Sternform entsprechende Gießform umständlich einsetzen und abschließend die Gußform von dem Ringfilter mit der erstarrten Vergußmasse abtrennen zu müssen.

Hier eine Verbesserung zu schaffen, ist das der Erfindung zugrunde liegende Problem.

Gelöst wird dieses Problem durch eine Herstellung eines stirnseitigen Faltenverschlusses nach dem kennzeichnenden Merkmal des Patentanspruchs 1.

Bei dem Wunsch nach einer geschlossenen Endscheibe eignet sich zu deren Herstellung insbesondere ein Verfahren nach dem Patentanspruch 2.

Ein Ausführungsbeispiel ist in der Zeichnung dargestellt. Es zeigen
- Fig. 1: die perspektivische Ansicht auf einen axialen Endbereich eines in seinem Umfang teilweise aufgebrochenen Ringfilters
- Fig. 2: einen Schnitt nach Linie II-II in Figur 1 durch einen Ausschnitt aus dem verschlossenen Endbereich eines von radial außen nach innen durchströmten Ringfilters
- Fig 3: einen Ausschnitt aus dem Endbereich eines Ringfilters als Schnitt nach Linie IV - IV mit einer im zentralen Bereich aus Blech bestehenden radial außen in Vergußmasse eingeformten Endscheibe.

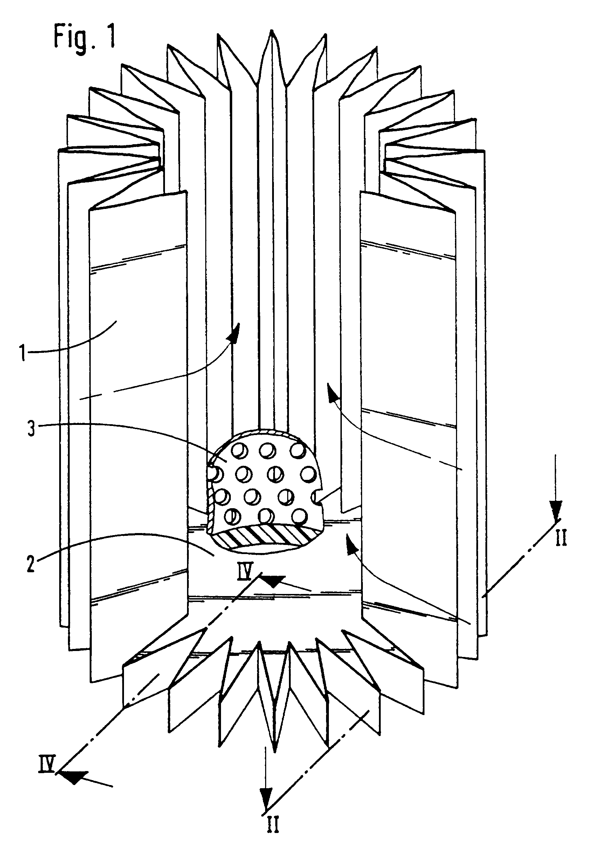

Das Ringfilter nach Figur 1 besitzt ein sternförmig zick-zackförmig gefaltetes Filterbahnenmaterial 1, das umfangsmäßig geschlossen ist.

Nach Fig. 1 ist eines der axialen Enden des Ringfilters über eine durchgehende Endscheibe aus Vergußmasse 2 verschlossen.

Diese Ringscheibe 2 besteht aus einem fließfähigen Gießmaterial.

Die Herstellung dieser durchgehenden aus Vergußmasse 2 bestehenden Endscheibe erfolgt in der Weise, daß der Filderstern mit seinem Bahnenmaterial 1 dicht auf eine Grundplatte aufgesetzt und daß dann das fließfähige Material für die Endscheibe auf die geschlossene Grundplatte aufgegeben wird. Die fließfähige die Endscheibe bildende Vergußmasse 2 kann auf diese Weise in die radialen Faltenräume des sternförmig gefalteten Bahnmaterials auf der Reinseite eindringen. Die Reinseite liegt bei dem beschriebenen Filterelement radial innen, da dieses von radial außen nach radial innen durchströmt wird. Radial innen kann das Filterbahnmaterial 1 an einer zylindrischen Zarge 3 anliegen, die in das fließfähige Endscheibenmaterial mit eingebettet ist.

Das zweite axiale Ende des Ringfilters kann auf beliebige Weise verschlossen sein, wobei dieser Verschluß in den bisher üblichen Formen erfolgen kann oder auch nach der vorliegenden Erfindung, wobei in der Endscheibe dann eine Abströmöffnung vorzusehen ist.

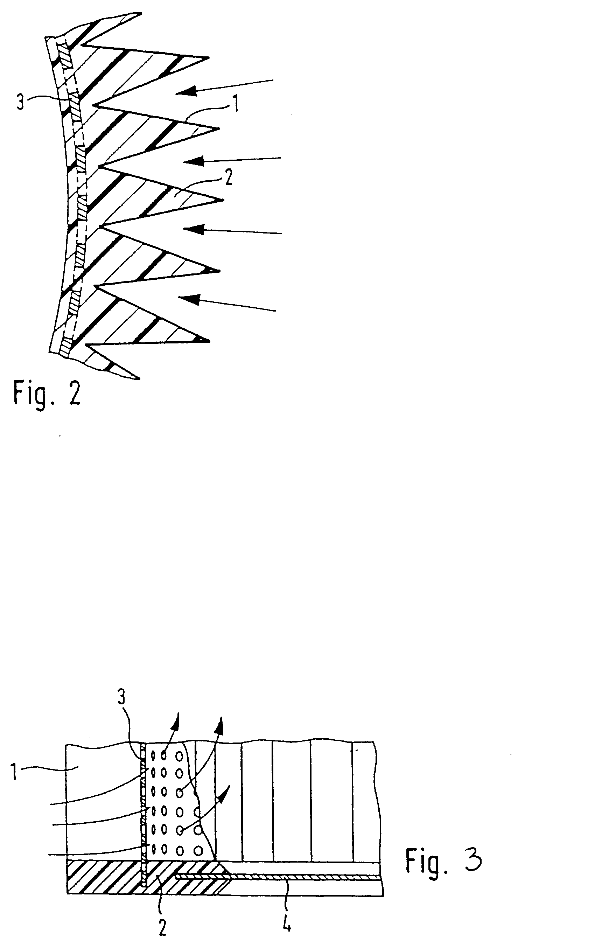

Anstelle einer geschlossenen Endscheibe aus Vergußmasse 2 kann auch eine ringförmige Falten-Stirnkantenabdichtung ausgebildet werden, wie sie Fig. 2 zeigt.

Bei der Ausführung nach Fig. 4 ragt die Vergußmasse 2 nur geringfügig nach radial innen über das gefaltete Filterbahnmaterial hinaus und umfaßt dort eine die betreffende Stirnseite abdeckende Blechscheibe 4, die dicht in die Vergußmasse 2 eingeformt ist. Die Scheibe 4 kann auch aus einer dünnen Kunststoffscheibe bestehen. Die Abdeckscheibe kann auch aus einem flachen Filtermaterial bestehen.

## Patentansprüche

1. Verfahren zur Herstellung eines Ringfilters aus sternförmig gefaltetem Filterbahmaterial für Gase mit einer radialen, von außen nach innen erfolgenden Durchströmung, bei dem zumindest an einem axialen Ende der ausschließlich innen liegende, reinseitige, sich zumindest über die Faltentiefe erstreckende Endbereich zur Bildung einer Endscheibe mit einer Vergußmasse verschlossen wird,
dadurch **gekennzeichnet,**
daß die fließfähige Vergußmasse bei dicht auf eine Grundplatte aufgesetzten Stirnkanten des Filterbahnmaterials derart aufgebracht wird, daß sie in die radialen Faltenräume der Reinseite eindringen kann.

2. Verfahren nach Anspruch 1,
dadurch **gekennzeichnet,**
daß die Vergußmasse nach radial innen über das gefaltete Filterbahnmaterial hinausragend aufgebracht wird und die gebildete Öffnung mit einer flachen, in die Vergußmasse eingeformten Endscheibe aus von der Vergußmasse abweichendem Material dicht verschlossen wird.

## Claims

1. Process for producing an annular filter from a filter web material folded into a star shaped configuration for gases with a radial flow-though from the exterior inwards, in which, at least at one axial end, the exclusively inner clean-sided end section extending at least over the fold depth is sealed by a sealing compound to form an end disc, characterised in that the flowable sealing compound is applied with the outside edges of the filter web material fitted tightly on a base plate so that it can penetrate into the radial fold cavities of the clean side.

2. Process according to claim 1, characterised in that the sealing compound is applied radially inwards over the folded filter web material and the opening formed is tightly sealed by a flat end disc formed in the sealing compound which is made of different material from that of the sealing compound.

## Revendications

1. Procédé de fabrication d'un filtre annulaire composé d'un matériau filtrant en bande plié en étoile, pour des gaz affluant dans le sens radial de l'extérieur vers l'intérieur, selon lequel la seule zone extrême côté pur se trouvant à l'intérieur, s'étendant au moins sur la profondeur des plis, sur une extrémité axiale, du moins, est fermée par une masse de remplissage pour la formation d'un disque d'extrémité, **caractérisé en ce que** la masse de remplissage fluide est appliquée sur des bords frontaux de la bande filtrante, placés au voisinage immédiat d'une plaque de base, de sorte qu'elle peut pénétrer dans les espaces radiaux des plis du côté pur.

2. Procédé suivant la revendication 1, **caractérisé en ce que** la masse de remplissage est appliquée dans le sens radial interne, en dépassant de la bande filtrante pliée, l'orifice formé étant hermétiquement fermé par un disque d'extrémité plat, conformé dans la masse de remplissage et composé d'un matériau différent de cette dernière.
